# EUROPÄISCHE PATENTSCHRIFT

(11) **EP 3 428 749 B1**
(45) Veröffentlichungstag und Bekanntmachung des Hinweises auf die Patenterteilung: **28.07.2021**
(21) Anmeldenummer: 18177504.0
(22) Anmeldetag: 13.06.2018
(51) Int. Cl.: G05B 19/042

(54) **VERFAHREN ZUM BETREIBEN EINER WERKSTÜCK-BEARBEITUNGS-ANLAGE UND WERKSTÜCK-BEARBEITUNGS-ANLAGE**
METHOD FOR OPERATING A WORKPIECE MACHINING SYSTEM AND WORKPIECE MACHINING SYSTEM
PROÉDÉ DE FONCTIONNEMENT D'UN SYSTÈME D'USINAGE DE PIÈCES ET D'UN SYSTÈME D'USINAGE DE PIÈCES

(30) Priorität: 13.07.2017 DE 102017115833
(43) Veröffentlichungstag der Anmeldung: 16.01.2019
(73) Patentinhaber: SW Automation GmbH, 88069 Tettnang (DE)
(72) Erfinder: Makis, Sven, 88085 Langenargen (DE); Kilic, Metin, 88048 Efrizweiler (DE)
(74) Vertreter: Schorr, Peter Karl

(56) Entgegenhaltungen:
- DE-A1-102015 105 799
- DE-U1-202015 004 517

## Beschreibung

Die Erfindung betrifft ein Verfahren zum Betreiben einer Werkstück-Bearbeitungs-Anlage sowie eine Werkstück-Bearbeitungs-Anlage, die durch ein derartiges Verfahren betrieben werden kann.

Eine Werkstück-Bearbeitungs-Anlage ist beispielsweise bekannt aus DE10 2007 029 233 C5.

Bei diesen Werkstück-Bearbeitungs-Anlagen sind eine Mehrzahl von Werkzeugmaschinen in Reihe und/oder einander gegenüberliegend angeordnet und durch eine Be- und Entlade-Vorrichtung versorgbar. Durch die Be- und Entlade-Vorrichtung, die einen Träger und eine entlang des Trägers verfahrbare Be- und Entladeeinrichtung aufweist, können Werkstücke, Werkzeuge oder dergleichen mittels eines Greifarms der Be- und Entladeeinrichtung in der jeweiligen Werkzeugmaschine angeordnet oder aus dieser entfernt werden.

Bei den bekannten Werkstück-Bearbeitungs-Anlagen weisen die Werkzeugmaschinen hierzu eine Be- und Entladeöffnung auf, die durch eine Luke mechanisch verschließbar oder freigebbar ist. Die Luke ist hierbei Teil einer Sicherheitseinrichtung und soll verhindern, dass die Be- und Entladeeinrichtung mit dem Greifarm in die Werkzeugmaschine eingreift, wenn ein Bediener-Zugang der Werkzeugmaschine geöffnet ist. Hierdurch soll eine mögliche Verletzung von Bedienpersonal durch herunterfallende Gegenstände vermieden werden.

Bei den bekannten Werkstück-Bearbeitungs-Anlagen sowie den Verfahren zum Betreiben derartiger Werkstück-Bearbeitungs-Anlagen hat es sich als nachteilig herausgestellt, dass das Öffnen und Wiederverschließen der Luke zeitaufwendig und wartungsintensiv ist.

Eine nicht gattungsgemäße Werkstück-Bearbeitungs-Anlage ist bekannt aus DE 10 205 105 799 A1 und DE 20 2015 004517 U1, bei denen jeweils eine Be- und Entladeeinrichtung stationär festgelegt ist und die Sicherheitseinrichtung jeweils über Berühsensoren gebildet ist.

Eine Aufgabe eines Ausführungsbeispiels der Erfindung ist, eine Werkstück-Bearbeitungs-Anlage sowie ein Verfahren zum Betreiben einer derartigen Werkstück-Bearbeitungs-Anlage vorzuschlagen, bei der die Sicherheitseinrichtung kompakt baut sowie Zeitbedarf und Wartungsaufwand reduziert sind.

Diese Aufgabe wird gelöst durch ein Verfahren zum Betreiben einer Werkstück-Bearbeitungs-Anlage, die mindestens eine Werkzeugmaschine, welche mindestens eine Be- und Entladeöffnung und mindestens einen Sicherheitsbereich umfasst, die mindestens eine Be- und Entlade-Vorrichtung, welche mindestens einen Träger und mindestens eine entlang des Trägers verfahrbare und, insbesondere mehrachsige, Be- und Entladeeinrichtung aufweist, wobei die Be- und Entladeeinrichtung vor wenigstens einer der mindestens einen Werkzeugmaschine in einer Be- und Entladeposition anordenbar ist und mindestens ein Greifarm der Be- und Entladeeinrichtung von einer Verfahrstellung, in der der Greifarm im Wesentlichen über dem Träger angeordnet ist, in eine Eingriffsstellung überführbar ist, in der der Greifarm seitlich über den Träger hervorragt und insbesondere in oder über der Be- und Entladeöffnung der Werkzeugmaschine angeordnet ist, und die mindestens eine Sicherheitseinrichtung zum Überwachen des Sicherheitsbereichs der mindestens einen Werkzeugmaschine umfasst, welche mindestens eine der Be- und Entlade-Vorrichtung funktional zuordenbare oder zugeordnete Steuereinheit und mindestens ein im oder am Sicherheitsbereich angeordnetes erstes Sensormittel aufweist, mit den Schritten:
a. Ggf. hinterlegen und/oder definieren mindestens eines sicherheitsrelevanten Ereignisses in der Steuereinheit;
b. Überwachen mindestens eines Sicherheitsbereichs mindestens einer Werkzeugmaschine durch das mindestens eine erste Sensormittel der Sicherheitseinrichtung;
c. Ggf. erfassen der Position der Be- und Entladeeinrichtung, insbesondere mittelbar oder unmittelbar, durch die Steuereinheit;
d. Erfassen des mindestens einen in der Steuereinheit definierten oder hinterlegten oder mindestens eines in der Steuereinheit definierten oder hinterlegten sicherheitsrelevanten Ereignisses im Sicherheitsbereich der Werkzeugmaschine durch das mindestens eine erste Sensormittel;
e. Blockieren eines Überführens des Greifarms der Be- und Entladeeinrichtung von der Verfahrstellung in die Eingriffsstellung, wenn sich der Greifarm in der Verfahrstellung befindet und/oder Überführen des Greifarms der Be- und Entladeeinrichtung von der Eingriffsstellung in die Verfahrstellung, wenn sich der Greifarm in der Eingriffstellung befindet.

Bei dem Träger der Be- und Entladevorrichtung kann es sich beispielsweise um ein schienenartiges Führungsmittel handeln. Dieses kann beispielsweise ebenerdig oder durch Stützen getragen vom Boden beabstandet sein und zumindest teilweise oberhalb der Werkzeugmaschinen angeordnet verlaufen. Bei der Be- und Entladeeinrichtung kann es sich beispielsweise um einen mehrachsigen Roboter handeln.

Dadurch, dass durch das erste Sensormittel und die Steuereinheit ein sicherheitsrelevantes Ereignis im Sicherheitsbereich der Werkzeugmaschine erfassbar ist und solchenfalls der Greifarm der Be- und Entladeeinrichtung von der Eingriffstellung in die Verfahrstellung zurückgeführt wird oder in der Verfahrstellung derart blockiert wird, dass der Greifarm nicht in die Eingriffstellung überführbar ist, ist gewährleistet, dass keine Werkstücke, Werkzeuge oder Dergleichen durch die Be- und Entladeöffnung der Werkzeugmaschinen gelangen können und eine Bedienperson verletzen können. Ferner ist hierdurch die Werkzeugmaschine ohne Luke ausbildbar und gleichzeitig der gleiche Sicherheitsstandard für Bedienpersonen gewährleistbar.

Dadurch, dass auf eine Luke an der Werkzeugmaschine, die die Be- und Entladeöffnung freigibt oder verschließt, verzichtet werden kann, ist die Werkzeugmaschine kompakt ausbildbar und das Verfahren zum Betreiben einer Werkstück-Bearbeitungs-Anlage zeitoptimiert ausgestaltbar.

Es erweist sich als vorteilhaft, wenn das mindestens eine in der Steuereinheit definierte, definierbare, hinterlegte oder hinterlegbare sicherheitsrelevante Ereignisse zumindest eine geöffneten Funktionsstellung eines Bediener-Zugangs der Werkzeugmaschine, ein Überführen des Bediener-Zugangs von einer geschlossenen Funktionsstellung in die geöffnete Funktionsstellung und/oder ein Eindringen eines Körpers in den Sicherheitsbereich der Werkzeugmaschine umfasst.

Dadurch, dass das sicherheitsrelevante Ereignis erfasst, ob ein Bedienerzugang der Werkzeugmaschine in einer geöffneten Funktionsstellung, also der Bedienerzugang offen ist oder von einer geschlossenen Funktionsstellung in die geöffnete Funktionsstellung überführbar ist, ist das Verfahren vereinfacht realisierbar.

Dadurch, dass das sicherheitsrelevante Ereignis auch ein Eindringen eines Körpers in den Sicherheitsbereich der Werkzeugmaschine umfassen kann, kann der Greifarm der Be- und Entladeeinrichtung bereits von einer Eingriffstellung in die Verfahrstellung überführt werden, bzw. in der Verfahrstellung gegen ein Überführen in die Eingriffstellung blockiert werden, bevor ein Bediener den Bedienerzugang der Werkzeugmaschine öffnet. Hierdurch ist die Sicherheit für Bedienpersonen weiter steigerbar.

Der Sicherheitsbereich der Werkzeugmaschine kann beispielsweise ausschließlich die Werkzeugmaschine und/oder ein Umfeld außerhalb der Werkzeugmaschine umfassen. Das Umfeld kann beispielsweise einen Bereich 5 m und weniger zur Werkzeugmaschine, insbesondere 4 m und weniger zur Werkzeugmaschine, insbesondere 2 m und weniger zur Werkzeugmaschine umfassen.

Es erweist sich als vorteilhaft, wenn das Überwachen des Sicherheitsbereichs der Werkzeugmaschine durch das mindestens eine erste Sensormittel der Sicherheitseinrichtung ein Erfassen einer geschlossenen Funktionsstellung oder geöffneten Funktionsstellung des Bediener-Zugangs der Werkzeugmaschine und/oder ein Erfassen eines Annäherns eines Körpers an die Werkzeugmaschine, insbesondere in den Sicherheitsbereich der Werkzeugmaschine, umfasst.

Solchenfalls kann das erste Sensormittel der Sicherheitseinrichtung einen Bewegungssensor, Entfernungsmesser oder einen Kippschalter des Bedienerzugangs der Werkzeugmaschine umfassen.

Grundsätzlich ist es denkbar, dass das Blockieren des Greifarms der Be- und Entladeeinrichtung, bzw. das Zurückführen des Greifarms der Be- und Entladeeinrichtung von der Eingriffstellung in die Verfahrstellung automatisch sofort immer dann erfolgt, wenn ein beliebiger Körper in den Sicherheitsbereich der Werkzeugmaschine eindringt. Das Verfahren lässt sich jedoch optimieren, wenn es folgende zusätzliche Schritte umfasst:
a. Ggf. hinterlegen und/oder definieren von Daten, insbesondere Körperformen und/oder Körperumrisse, in der Steuereinheit zur Unterscheidung von Gegenständen und Personen durch die Steuereinheit.
b. Erfassen eines Annäherns eines Körpers an eine Werkzeugmaschine, insbesondere in den Sicherheitsbereich der Werkzeugmaschine, durch das mindestens eine erste Sensormittel;
c. Analysieren des Körpers durch die Steuereinheit und Feststellen und Erkennen des erfassten Körpers als Gegenstand oder als Person;
d. Feststellen eines sicherheitsrelevanten Ereignisses zumindest wenn der Körper eine Person umfasst.

Solchenfalls kann die Steuereinrichtung mittels der die durch das erste Sensormittel erfassten Daten feststellen, ob es sich bei dem Körper um einen Gegenstand oder um eine Person handelt. Wenn es sich bei dem Körper um eine Person handelt, stellt die Steuereinheit fest, dass es sich um ein sicherheitsrelevantes Ereignis handelt und blockiert solchenfalls ein mögliches Überführen des Greifarms der Be- und Entladeeinrichtung von der Verfahrstellung in die Eingriffstellung, bzw. verfährt den Greifarm der Be- und Entladeeinrichtung von der Eingriffstellung in die Verfahrstellung.
Wenn es sich bei dem erfassten Körper um einen Gegenstand handelt, ist es denkbar, dass dieses durch die Steuereinheit nicht als sicherheitsrelevantes Ereignis erfasst wird. Hierdurch ist es ermöglicht, beispielsweise durch autonom verfahrbare Maschinen und Fahrzeuge, Werkstücke, Werkzeuge und Dergleichen zwischen den Werkzeugmaschinen zu verfahren, ohne dass hierdurch Bearbeitungsvorgänge unterbrochen werden.

Hierdurch ist das Verfahren weiter zeitoptimiert.

Das Erfassen der Position der Be- und Entladeeinrichtung kann grundsätzlich auf beliebige Art und Weise erfolgen. Es erweist sich als vorteilhaft, wenn das Erfassen der Position der Be- und Entladeeinrichtung durch mindestens ein zweites Sensormittel der Sicherheitseinrichtung erfolgt, durch das zumindest ein Abstand der Be- und Entladeeinrichtung zur Werkzeugmaschine, bei der das sicherheitsrelevanten Ereignis festgestellt ist, erfassbar ist.

Für die Sicherheit der Bedienperson ist es notwendig, dass sichergestellt ist, dass der Greifarm der Be- und Entladeeinrichtung nicht in oder über der Be- und Entladeöffnung der Werkzeugmaschine angeordnet ist oder seitlich über den Träger hinausragt. Wenn die Bedienperson an der Werkzeugmaschine tätig ist, ist der Greifarm oberhalb des Trägers der Be- und Entlade- Vorrichtung angeordnet, so dass der Träger als zusätzlicher Schutz fungiert. Um die Sicherheit der Bedienperson weiter zu erhöhen, ist bei einer Ausführungsform des Verfahrens vorgesehen, dass die Be- und Entladeeinrichtung beim Erfassen des mindestens eines sicherheitsrelevanten Ereignisses ein Bewegen der Be- und Entladeeinrichtung aus der Be- und Entladeposition vor der Werkzeugmaschine, bei der das sicherheitsrelevante Ereignis erfasst wird, umfasst.

Um einen Stillstand der Werkstück-Bearbeitungs-Anlage zu verhindern erweist es sich als vorteilhaft, wenn das Verfahren nachfolgende weitere Schritte umfasst:
a. Unterbrechen von in der Steuereinheit hinterlegbaren oder hinterlegten Bearbeitungsvorgänge der Be- und Entladeeinrichtung an der Werkzeugmaschine, an der das sicherheitsrelevante Ereignis erfasst wird;
b. Feststellen ob ein in der Steuereinheit hinterlegbaren oder hinterlegte mindestens ein Bearbeitungsvorgang der Be- und Entladeeinrichtung an einer Werkzeugmaschine, an der kein sicherheitsrelevantes Ereignis festgestellt ist, fortgesetzt werden kann;
c. Bewegen der Be- und Entladeeinrichtung zu einer Werkzeugmaschine, an der kein sicherheitsrelevantes Ereignis festgestellt ist, und an der ein in der Steuereinheit hinterlegbarer oder hinterlegter Bearbeitungsvorgang ausgeführt werden kann; oder
d. Bewegen der Be- und Entladeeinrichtung zu einer Parkposition, wenn an jeder Werkzeugmaschine ein sicherheitsrelevantes Ereignis festgestellt ist und/oder an der kein in der Steuereinheit hinterlegbarer oder hinterlegter Bearbeitungsvorgang ausgeführt werden kann;
e. Insbesondere durchgehendes prüfen, ob das an der Werkzeugmaschine festgestellte sicherheitsrelevante Ereignis beendet ist und ob der unterbrochene Bearbeitungsvorgang fortgesetzt werden kann.

Hierdurch kann die Bearbeitung an einer Werkzeugmaschine pausiert oder kurzzeitig ausgesetzt werden und mit der Bearbeitung, bzw. einem Zuführen von Werkstücken, Werkzeugen und Dergleichen an einer weiteren Werkzeugmaschine, an der kein sicherheitsrelevantes Ereignis festgestellt wurde, fortgesetzt werden. Hierdurch sind Bearbeitungsvorgänge flexibel neu sortierbar, wodurch ein Stillstand der Werkstück-Bearbeitungs-Anlage verhindert oder zumindest Stillstandzeiten reduziert werden.

Darüber hinaus wird die Aufgabe gelöst durch eine Werkstück-Bearbeitungs-Anlage, die insbesondere nach einem Verfahren mit den zuvor genannten Merkmalen betreibbar ist, mit mindestens einer Werkzeugmaschine, die mindestens eine Be- und Entladeöffnung und mindestens einen Sicherheitsbereich umfasst, mit mindestens einer Be- und Entlade-Vorrichtung, die mindestens einen Träger und mindestens eine entlang des Trägers verfahrbare und, insbesondere mehrachsige, Be- und Entladeeinrichtung aufweist, wobei die Be- und Entladeeinrichtung vor wenigstens einer der mindestens einen Werkzeugmaschine in einer Be- und Entladeposition anordenbar ist und mindestens ein Greifarm der Be- und Entladeeinrichtung von einer Verfahrstellung, in der der Greifarm im Wesentlichen über dem Träger angeordnet ist, in eine Eingriffsstellung überführbar ist, in der der Greifarm, in der der Greifarm seitlich über den Träger hervorragt und insbesondere in oder über der Be- und Entladeöffnung der Werkzeugmaschine angeordnet ist, und mit mindestens einer Sicherheitseinrichtung zum Überwachen des Sicherheitsbereichs der mindestens einen Werkzeugmaschine, die mindestens eine der Be- und Entlade-Vorrichtung funktional zuordenbare oder zugeordnete Steuereinheit und mindestens ein im oder am Sicherheitsbereich angeordnetes erstes Sensormittel aufweist.

Der Träger der Be- und Entladevorrichtung kann beispielsweise schienenartig ausgebildet sein und die Be- und Entladeeinrichtung auf einem Schlitten auf dem Träger geführt, bewegbar sein. Darüber hinaus kann die Be- und Entladevorrichtung ein Antriebsmittel umfassen, das die Be- und Entladeeinrichtung auf dem Träger verfährt.

Grundsätzlich ist es denkbar, dass die Werkzeugmaschine im Bereich der Be- und Entladeöffnung zusätzlich eine Luke umfasst. Es erweist sich jedoch als vorteilhaft, wenn die Werkzeugmaschine lukenlos und ausschließlich die Be- und Entladeöffnung als Zugang für die Be- und Entladeeinrichtung aufweist.

Darüber hinaus kann die Werkzeugmaschine einen Bedienerzugang umfassen, durch den Bedienpersonal ohne weitere Hilfsmittel Zugang zur Werkzeugmaschine hat.

Bei einer Ausführungsform der Werkstück-Bearbeitungsanlage ist der Bedienerzugang ebenerdig ausgebildet und die Be- und Entladeöffnung, auf einer dem Boden abgewandten Seite der Werkzeugmaschine angeordnet. Die Be- und Entlade-Vorrichtung umfasst solchenfalls einen Träger, der auf Stützen zum Boden beabstandet ist und die Be- und Entladeeinrichtung zum Boden beabstandet verfährt.

Darüber hinaus erweist es sich als vorteilhaft, wenn das mindestens eine erste Sensormittel der Sicherheitseinrichtung mindestens einen Bewegungssensor, Entfernungsmesser oder einen Kippschalter eines Bediener-Zugangs der Werkzeugmaschine umfasst.

Die Position der Be- und Entladeeinrichtung lässt sich einfach feststellen, wenn die Sicherheitseinrichtung mindestens ein zweites Sensormittel umfasst, durch das ein Abstand der Be- und Entladeeinrichtung zur Werkzeugmaschine erfassbar ist und das einen Entfernungsmesser und/oder eine Motorstellung eines Antriebs der Be- und Entladeeinrichtung umfasst.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Werkstück-Bearbeitungs-Anlage und des Verfahrens zum Betreiben einer Werkstück-Bearbeitungs-Anlage.

In der Zeichnung zeigt:
- Figur 1: Eine perspektivische Seitenansicht auf eine Werkstück-Bearbeitungs-Anlage mit einer Be- und Entladeeinrichtung in einer Eingriffstellung eines Greifarms;
- Figur 2: Eine perspektivische Seitenansicht der Werkstück-Bearbeitungs-Anlage gemäß Figur 1 bei Erfassen eines sicherheitsrelevanten Ereignisses;
- Figur 3: Ein schematisches Ablaufdiagramm eines ersten Ausführungsbeispiels des Verfahrens;
- Figur 4: Ein schematisches Ablaufdiagramm einer Ergänzung des Verfahrens gemäß Figur 3;
- Figur 5: Ein schematisches Ablaufdiagramm einer Ausführungsform ergänzender Verfahrensschritte zum Verfahren gemäß Figur 3.

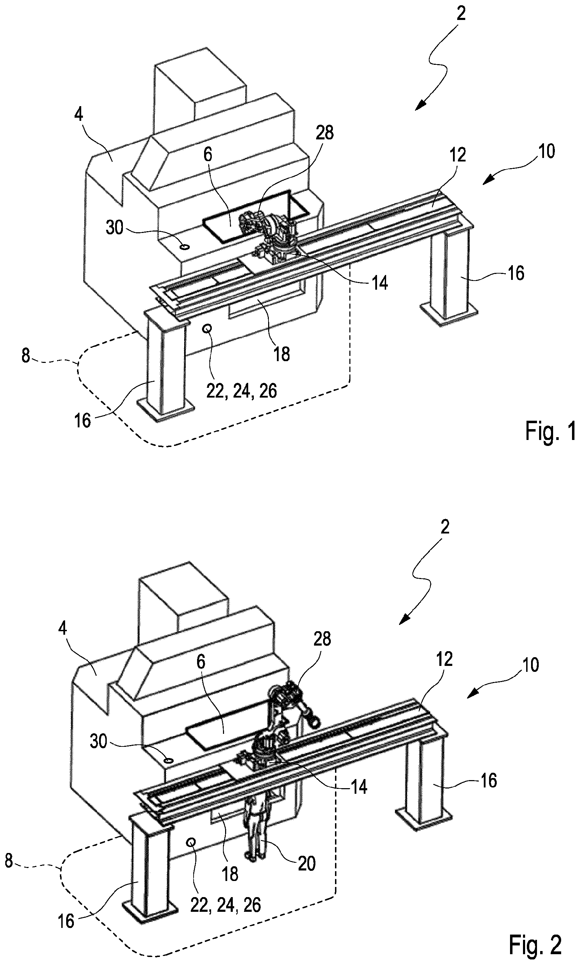

Die Figuren 1 und 2 zeigen eine insgesamt mit dem Bezugszeichen 2 versehene Werkstück-Bearbeitungs-Anlage. Diese umfasst mindestens eine Werkzeugmaschine 4, welche mindestens eine Be- und Entladeöffnung 6 und einen Sicherheitsbereich 8 umfasst.

Darüber hinaus umfasst die Werkstück-Bearbeitungs-Anlage 2 eine Be- und Entlade-Vorrichtung 10, welche einen Träger 12 und eine als Roboter ausgebildete, mehrachsige Be- und Entladeeinrichtung 14 aufweist. Bei dem in den Figuren 1 und 2 gezeigten Ausführungsbeispiel ist die Be- und Entlade-vorrichtung zu einem Boden beabstandet und die Träger 12 auf Stützen 16 angeordnet. Durch die Anordnung des Trägers 12 auf den Stützen 16 ist ein Bedienerzugang 18 der Werkzeugmaschine 4 für eine Person 20 zugänglich.

Darüber hinaus umfasst die Werkzeugmaschine 4 ein erstes Sensormittel 22, mit der der Sicherheitsbereich 8 überwachbar ist. Das erste Sensormittel 22 ist Teil einer Sicherheitseinrichtung 24, die zusätzlich zum ersten Sensormittel 22 eine Steuereinheit 26 umfasst, mit der die Daten des ersten Sensormittels 22 erfassbar und auswertbar und die Be- und Entlade-Vorrichtung 10 ansteuerbar ist.

Figur 1 zeigt die Werkstück-Bearbeitungs-Anlage 2, bei der kein sicherheitsrelevantes Ereignis festgestellt ist. Die Be- und Entladeeinrichtung 14 befindet sich in einer Be- und Entladeposition vor der Werkzeugmaschine 4 und greift mit einem Greifarm 28 durch die Be- und Entladeöffnung 6 der Werkzeugmaschine 4 in die Werkzeugmaschine 4 ein. Durch den Greifarm 28 sind beispielsweise Werkstücke, Werkzeuge oder Dergleichen in den Innenraum der Werkzeugmaschine 4 hinzufügbar oder entnehmbar.

Figur 2 zeigt die Werkstück-Bearbeitungs-Anlage 2, bei der ein sicherheitsrelevantes Ereignis festgestellt wurde. Bei dem sicherheitsrelevanten Ereignis gemäß Figur 2 handelt es sich um das Eindringen einer Person 20 in den Sicherheitsbereich 8 der Werkzeugmaschine 4.

Die Be- und Entladeeinrichtung 14 befindet sich nach wie vor in der Be- und Entladeposition vor der Werkzeugmaschine 4. Der Greifarm 28 wurde jedoch automatisch durch die Sicherheitseinrichtung 24, insbesondere die Steuereinheit 26 von einer Eingriffstellung, in der der Greifarm 28, in der der Greifarm 28 seitlich über den Träger 12 hervorragt und insbesondere in die Be- und Entladeöffnung 6 der Werkzeugmaschine 4 eingetaucht ist, in eine Verfahrstellung überführt, in der der Greifarm 28 im Wesentlichen über dem Träger 12 der Be- und Entlade-Vorrichtung 10 angeordnet ist.

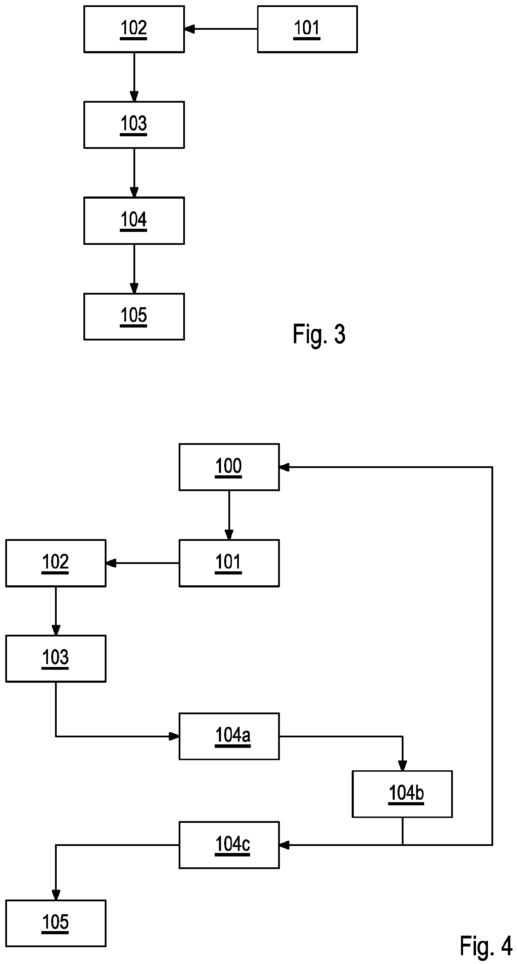

Anhand der Figuren 3 bis 4 wird nachfolgend ein Verfahren zum Betreiben einer Werkstück-Bearbeitungs-Anlage 2 erläutert.

In einem ersten Schritt 101 wird gegebenenfalls ein sicherheitsrelevantes Ereignis in der Steuereinheit 26 hinterlegt oder definiert. Hierbei kann es sich bei dem sicherheitsrelevanten Ereignis um eine geöffnete Funktionsstellung des Bedienerzugangs 18, das Überführen des Bedienerzugangs 18 von einer geschlossenen Funktionsstellung in eine geöffnete Funktionsstellung und/oder um ein Eindringen eines Körpers 20 in den Sicherheitsbereich 8 der Werkzeugmaschine 4 handeln.

In einem Schritt 102 wird der Sicherheitsbereich 8 durch das erste Sensormittel 22 der Sicherheitseinrichtung 24 überwacht.

In einem weiteren Schritt 103 wird die Position der Be- und Entladeeinrichtung 14 durch die Steuereinheit 26 erfasst. Dieses kann beispielsweise durch ein zweites Sensormittel 30 der Sicherheitseinrichtung 24 erfolgen.

In einem Folgeschritt 104 wird ein in der Steuereinheit 26 definiertes, hinterlegtes oder hinterlegbares sicherheitsrelevantes Ereignis im Sicherheitsbereich 8 der Werkzeugmaschine 4 durch das erste Sensormittel 22 erfasst. Durch das Erfassen des sicherheitsrelevanten Ereignisses wird ein Überführen des Greifarms 28 der Be- und Entladeeinrichtung 14 von der Verfahrstellung gemäß Figur 2 in die Eingriffstellung gemäß Figur 1 blockiert, bzw. ein Greifarm 28, der sich in der Eingriffstellung gemäß Figur 1 befindet von der Eingriffstellung in die Verfahrstellung durch die Steuereinheit 26 überführt.

Das Überwachen des Sicherheitsbereichs 8 der Werkzeugmaschine 4 erfolgt durch das erste Sensormittel 22. Dieses kann beispielsweise eine geschlossene Funktionsstellung des Bedienerzugangs 18, ein Überführen des Bedienerzugangs 18 von einer geschlossenen Funktionsstellung in eine geöffnete Funktionsstellung und/oder ein Annähern eines Körpers 20 an die Werkzeugmaschine 4, insbesondere in den Sicherheitsbereich 8 der Werkzeugmaschine 4 umfassen.

Figur 4 zeigt eine Weiterbildung des Verfahrens gemäß Figur 3 und zergliedert den Verfahrensschritt 104 gemäß Figur 3 in mehrere Zwischenschritte.

In einem gegebenenfalls vorgesehenen Schritt 100, der gleichzeitig oder dem Schritt 101 vorgelagert ist, wird in der Steuereinheit 26 ein Datum oder mehrere Daten hinterlegt oder definiert, die beispielsweise der Unterscheidung von Gegenständen und Personen 20 durch die Steuereinheit 26 dient und insbesondere Körperformen und/oder Körperumrisse umfasst.

Nach dem Schritt 103 gemäß Figur 3, wird in einem Schritt 104a durch das erste Sensormittel 22 das Annähern eines Körpers 20 an die Werkzeugmaschine 4, insbesondere in den Sicherheitsbereich 8 der Werkzeugmaschine 4, erfasst. In einem direkt anschließendem Schritt 104b wird der Körper 20 durch die Steuereinheit 26 analysiert und die Unterscheidung des Körpers als Gegenstand oder als Person 20 festgestellt und erkannt.

Wird im Schritt 104b festgestellt, dass es sich bei dem Körper 20 um einen Gegenstand handelt, liegt kein sicherheitsrelevantes Ereignis vor. Das Verfahren springt dann zurück auf den Schritt 100. Wird jedoch festgestellt, dass es sich bei dem Körper um eine Person 20 handelt, wird in einem Schritt 104c festgestellt, dass es sich um ein sicherheitsrelevantes Ereignis handelt und dieses Ereignis festgestellt. Das Verfahren setzt solchenfalls mit Schritt 105 fort.

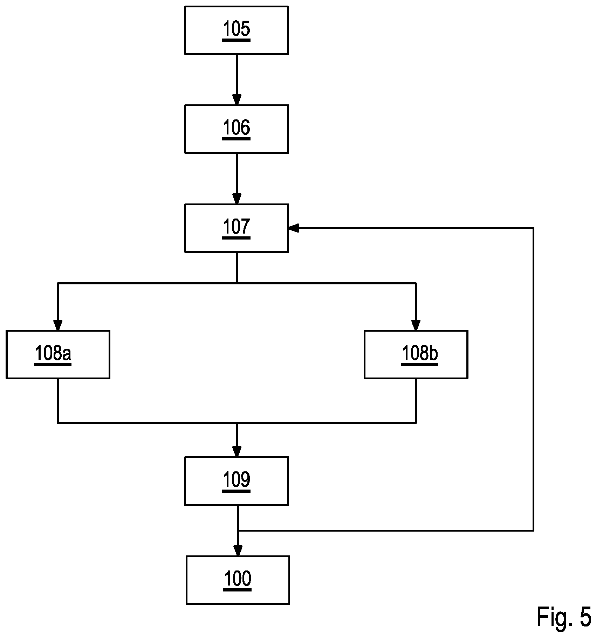

Figur 5 zeigt eine Ausführungsform des Verfahrens gemäß Figur 3, bei dem sich anschließend an Schritt 105 weitere Verfahrensschritte anschließen. In einem Schritt 106 werden in der Steuereinheit 26 hinterlegte Bearbeitungsvorgänge der Be- und Entladeeinrichtung 14 an der Werkzeugmaschine 4 unterbrochen, an der das sicherheitsrelevante Ereignis erfasst wird.

In einem Folgeschritt 107 wird festgestellt, ob ein in der Steuereinheit 26 hinterlegter Bearbeitungsvorgang der Be- und Entladeeinrichtung 14 an einer Werkzeugmaschine 4 fortgesetzt werden kann, an der kein sicherheitsrelevantes Ereignis festgestellt ist. Wird durch die Steuereinheit 26 eine Werkzeugmaschine 4 erfasst, an der kein sicherheitsrelevantes Ereignis festgestellt ist und an der ein in der Steuereinheit 26 hinterlegter Bearbeitungsvorgang ausgeführt werden kann, wird die Be- und Entladeeinrichtung 14 zu dieser Werkzeugmaschine 4 in einem Schritt 108a bewegt.

Wird jedoch keine Werkzeugmaschine 4 ermittelt, an der kein sicherheitsrelevantes Ereignis festgestellt ist und/oder an der kein in der Steuereinheit hinterlegter Bearbeitungsvorgang ausgeführt werden kann, wird die Be- und Entladeeinrichtung 14 in einem Schritt 108b in eine Parkposition bewegt.

Im Schritt 108a setzt die Be- und Entladeeinrichtung 14 einen der Werkzeugmaschine 4 zugehörigen Bearbeitungsvorgang fort, sobald es dort die Be- und Entladeposition erreicht hat.

In einem Folgeschritt 109, der sich sowohl den Schritten 108a und 108b anschließt, wird durchgehend geprüft, ob das an der Werkzeugmaschine 4 festgestellte sicherheitsrelevante Ereignis beendet ist und ob der unterbrochene Bearbeitungsvorgang fortgesetzt werden kann.

Besteht an der Werkzeugmaschine 4, an der das sicherheitsrelevante Ereignis festgestellt wurde, nach wie vor das sicherheitsrelevante Ereignis, springt das Verfahren zurück auf Schritt 107 und erfasst erneut, ob eine in der Steuereinheit 26 hinterlegter Bearbeitungsvorgang der Be- und Entladeeinrichtung 14 an einer Werkzeugmaschine 4, an der kein sicherheitsrelevantes Ereignis festgestellt ist, fortgesetzt werden kann. Wird jedoch im Schritt 109 festgestellt, dass das sicherheitsrelevante Ereignis an der Werkzeugmaschine 4 nicht mehr besteht, kehrt das Verfahren auf Schritt 100 zurück.

### Bezugszeichenliste

- 2: Werkstück-Bearbeitungs-Anlage
- 4: Werkzeugmaschine
- 6: Be- und Entladeöffnung
- 8: Sicherheitsbereich
- 10: Be- und Entlade-Vorrichtung
- 12: Träger
- 14: Be- und Entladeeinrichtung
- 16: Stützen
- 18: Bediener-Zugang
- 20: Körper, Person
- 22: erstes Sensormittel
- 24: Sicherheitseinrichtung
- 26: Steuereinheit
- 28: Greifarm
- 30: zweites Sensormittel
- 100- 109: Verfahrensschritte

## Patentansprüche

1. Verfahren zum Betreiben einer Werkstück-Bearbeitungs-Anlage (2), die mindestens eine Werkzeugmaschine (4), welche mindestens eine Be- und Entladeöffnung (6) und mindestens einen Sicherheitsbereich (8) umfasst, die mindestens eine Be- und Entlade-Vorrichtung (10) welche mindestens einen Träger (12) und mindestens eine entlang des Trägers (12) verfahrbare und, insbesondere mehrachsige, Be- und Entladeeinrichtung (14) aufweist, wobei die Be- und Entladeeinrichtung (14) vor wenigstens einer der mindestens einen Werkzeugmaschine (4) in einer Be- und Entladeposition anordenbar ist und mindestens ein Greifarm (28) der Be- und Entladeeinrichtung (14) von einer Verfahrstellung, in der der Greifarm (28) im Wesentlichen über dem Träger (12) angeordnet ist, in eine Eingriffsstellung überführbar ist, in der der Greifarm (28) seitlich über den Träger (12) hervorragt und insbesondere in oder über der Be- und Entladeöffnung (6) der Werkzeugmaschine (4) angeordnet ist, und die mindestens eine Sicherheitseinrichtung (24) zum Überwachen des Sicherheitsbereichs (8) der mindestens einen Werkzeugmaschine (4) umfasst, welche mindestens eine der Be- und Entlade-Vorrichtung (10) funktional zuordenbare oder zugeordnete Steuereinheit (26) und mindestens ein im oder am Sicherheitsbereich (8) angeordnetes erstes Sensormittel (22) aufweist, mit den Schritten:
a. Ggf. Hinterlegen und/oder Definieren mindestens eines sicherheitsrelevanten Ereignisses in der Steuereinheit (26);
b. Überwachen mindestens eines Sicherheitsbereichs (8) mindestens einer Werkzeugmaschine (4) durch das mindestens eine erste Sensormittel (22) der Sicherheitseinrichtung (24);
c. Erfassen der Position der Be- und Entladeeinrichtung (14) mittelbar oder unmittelbar durch die Steuereinheit (26);
d. Erfassen des mindestens einen in der Steuereinheit (26) definierten oder hinterlegten oder mindestens eines in der Steuereinheit (26) definierten oder hinterlegten sicherheitsrelevanten Ereignisses im Sicherheitsbereich (8) der Werkzeugmaschine (4) durch das mindestens eine erste Sensormittel (22);
e. Blockieren eines Überführens des Greifarms (28) der Be- und Entladeeinrichtung (14) von der Verfahrstellung in die Eingriffsstellung, wenn sich der Greifarm (28) in der Verfahrstellung befindet und Überführen des Greifarms (28) der Be- und Entladeeinrichtung (14) von der Eingriffsstellung in die Verfahrstellung, wenn sich der Greifarm (28) in der Eingriffstellung befindet.

2. Verfahren nach Anspruch 1, **dadurch gekennzeichnet, dass** das mindestens eine in der Steuereinheit (26) definierte, definierbare, hinterlegte oder hinterlegbare sicherheitsrelevante Ereignisse zumindest eine geöffneten Funktionsstellung eines Bediener-Zugangs (18) der Werkzeugmaschine (4), ein Überführen des Bediener-Zugangs (18) von einer geschlossenen Funktionsstellung in die geöffnete Funktionsstellung und/oder ein Eindringen eines Körpers (20) in den Sicherheitsbereich (8) der Werkzeugmaschine (4) umfasst.

3. Verfahren nach Anspruch 1 oder 2, **dadurch gekennzeichnet, dass** das Überwachen des Sicherheitsbereichs (8) der Werkzeugmaschine (4) durch das mindestens eine erste Sensormittel (22) der Sicherheitseinrichtung (24) ein Erfassen einer geschlossenen Funktionsstellung oder geöffneten Funktionsstellung des Bediener-Zugangs (18) der Werkzeugmaschine (4) und/oder ein Erfassen eines Annäherns eines Körpers (20) an die Werkzeugmaschine (4), insbesondere in den Sicherheitsbereich (8) der Werkzeugmaschine (4), umfasst.

4. Verfahren nach Anspruch 3, **gekennzeichnet durch** die Schritte:
a. Ggf. Hinterlegen und/oder Definieren von Daten, insbesondere Körperformen und/oder Körperumrisse, in der Steuereinheit (26) zur Unterscheidung von Gegenständen und Personen (20) durch die Steuereinheit (26).
b. Erfassen eines Annäherns eines Körpers (20) an eine Werkzeugmaschine (4), insbesondere in den Sicherheitsbereich (8) der Werkzeugmaschine (4), durch das mindestens eine erste Sensormittel (22);
c. Analysieren des Körpers durch die Steuereinheit (26) und Feststellen und Erkennen des erfassten Körpers (20) als Gegenstand oder als Person (20);
d. Feststellen eines sicherheitsrelevanten Ereignisses zumindest wenn der Körper eine Person (20) umfasst.

5. Verfahren nach mindestens einem der vorhergehenden Ansprüche, **dadurch gekennzeichnet, dass** das Erfassen der Position der Be- und Entladeeinrichtung (14) durch mindestens ein zweites Sensormittel (30) der Sicherheitseinrichtung (24) erfolgt, durch das zumindest ein Abstand der Be- und Entladeeinrichtung (14) zur Werkzeugmaschine (4), bei der das sicherheitsrelevanten Ereignis festgestellt ist, erfassbar ist.

6. Verfahren nach mindestens einem der vorhergehenden Ansprüche, mit dem Schritt, dass die Be- und Entladeeinrichtung (14) beim Erfassen des mindestens eines sicherheitsrelevanten Ereignisses ein Bewegen der Be- und Entladeeinrichtung (14) aus der Be- und Entladeposition vor der Werkzeugmaschine (4), bei der das sicherheitsrelevante Ereignis erfasst wird, umfasst.

7. Verfahren nach Anspruch 6, **gekennzeichnet durch** die Schritte:
a. Unterbrechen von in der Steuereinheit (26) hinterlegbaren oder hinterlegten Bearbeitungsvorgänge der Be- und Entladeeinrichtung (14) an der Werkzeugmaschine (4), an der das sicherheitsrelevante Ereignis erfasst wird;
b. Feststellen ob ein in der Steuereinheit (26) hinterlegbaren oder hinterlegte mindestens ein Bearbeitungsvorgang der Be- und Entladeeinrichtung (14) an einer Werkzeugmaschine (4), an der kein sicherheitsrelevantes Ereignis festgestellt ist, fortgesetzt werden kann;
c. Bewegen der Be- und Entladeeinrichtung (14) zu einer Werkzeugmaschine (4), an der kein sicherheitsrelevantes Ereignis festgestellt ist, und an der ein in der Steuereinheit (26) hinterlegbarer oder hinterlegter Bearbeitungsvorgang ausgeführt werden kann; oder
d. Bewegen der Be- und Entladeeinrichtung zu einer Parkposition, wenn an jeder Werkzeugmaschine (4) ein sicherheitsrelevantes Ereignis festgestellt ist und/oder an der kein in der Steuereinheit (26) hinterlegbarer oder hinterlegter Bearbeitungsvorgang ausgeführt werden kann;
e. Insbesondere durchgehendes Prüfen, ob das an der Werkzeugmaschine (4) festgestellte sicherheitsrelevante Ereignis beendet ist und ob der unterbrochene Bearbeitungsvorgang fortgesetzt werden kann.

8. Werkstück-Bearbeitungs-Anlage (2), die nach einem Verfahren der Ansprüche 1 bis 7 betreibbar ist, mit mindestens einer Werkzeugmaschine (4), die mindestens eine Be- und Entladeöffnung und mindestens einen Sicherheitsbereich (8) umfasst, mit mindestens einer Be- und Entlade-Vorrichtung (10), die mindestens einen Träger (12) und mindestens eine entlang des Trägers (12) verfahrbare und, insbesondere mehrachsige, Be- und Entladeeinrichtung (14) aufweist, wobei die Be- und Entladeeinrichtung (14) vor wenigstens einer der mindestens einen Werkzeugmaschine (4) in einer Be- und Entladeposition anordenbar ist und mindestens ein Greifarm der Be- und Entladeeinrichtung (14) von einer Verfahrstellung, in der der Greifarm (28) im Wesentlichen über dem Träger (12) angeordnet ist, in eine Eingriffsstellung überführbar ist, in der der Greifarm (28) seitlich über den Träger (12) hervorragt und insbesondere in oder über der Be- und Entladeöffnung (6) der Werkzeugmaschine (4) angeordnet ist, und mit mindestens einer Sicherheitseinrichtung (24) zum Überwachen des Sicherheitsbereichs (8) der mindestens einen Werkzeugmaschine (4), die mindestens eine der Be- und Entlade-Vorrichtung (10) funktional zuordenbare oder zugeordnete Steuereinheit (26) und mindestens ein im oder am Sicherheitsbereich (8) angeordnetes erstes Sensormittel (22) aufweist.

9. Werkstück-Bearbeitungs-Anlage (2) nach Anspruch 8, **dadurch gekennzeichnet, dass** das mindestens eine erste Sensormittel (22) der Sicherheitseinrichtung (24) mindestens einen Bewegungssensor, Entfernungsmesser oder einen Kippschalter eines Bediener-Zugangs (18) der Werkzeugmaschine (4) umfasst.

10. Werkstück-Bearbeitungs-Anlage (2) nach Anspruch 8 oder 9, **dadurch gekennzeichnet, dass** die Sicherheitseinrichtung (24) mindestens ein zweites Sensormittel (30) umfasst, durch das ein Abstand der Be- und Entladeeinrichtung (14) zur Werkzeugmaschine (4) erfassbar ist und das einen Entfernungsmesser und/oder eine Motorstellung eines Antriebs der Be- und Entladeeinrichtung (14) umfasst.

## Claims

1. Method for operating a workpiece machining system (2), which has at least one machine tool (4), which comprises at least one loading and unloading opening (6) and at least one safety area (8), which has at least one loading and unloading apparatus (10) which has at least one carrier (12) and at least one loading and unloading device (14) which can be moved along the carrier (12) and, in particular, has several axes, wherein the loading and unloading device (14) can be arranged in front of at least one of the at least one machine tool (4) in a loading and unloading position and at least one gripping arm (28) of the loading and unloading device (14) can be moved from a travel position, in which the gripping arm (28) is arranged substantially above the carrier (12), into an engagement position, in which the gripping arm (28) projects laterally beyond the carrier (12) and in particular is arranged in or above the loading and unloading opening (6) of the machine tool (4), and which comprises at least one safety device (24) for monitoring the safety area (8) of the at least one machine tool (4), which has at least one control unit (26), which is functionally assigned to or can be assigned to the loading and unloading apparatus (10), and at least one first sensor means (22) arranged in or on the safety area (8), having the steps:
a. if required, storing and/or defining at least one safety-related event in the control unit (26);
b. monitoring at least one safety area (8) of at least one machine tool (4) by means of the at least one first sensor means (22) of the safety device (24);
c. detecting the position of the loading and unloading device (14) indirectly or directly by means of the control unit (26);
d. detecting the at least one safety-related event defined or stored in the control unit (26) or at least one safety-related event defined or stored in the control unit (26) in the safety area (8) of the machine tool (4) by means of the at least one first sensor means (22);
e. blocking a movement of the gripping arm (28) of the loading and unloading device (14) from the travel position into the engagement position if the gripping arm (28) is in the travel position and moving the gripping arm (28) of the loading and unloading device (14) from the engagement position into the travel position if the gripping arm (28) is in the engagement position.

2. Method according to Claim 1, **characterised in that** the at least one safety-related event which is defined, can be defined, stored or can be stored in the control unit (26) comprises at least one open functional position of an operator access (18) of the machine tool (4), a movement of the operator access (18) from a closed functional position into the open functional position and/or a penetration of a body (20) into the safety area (8) of the machine tool (4).

3. Method according to Claim 1 or 2, **characterised in that** the monitoring of the safety area (8) of the machine tool (4) by means of the at least one first sensor means (22) of the safety device (24) comprises detecting a closed functional position or open functional position of the operator access (18) of the machine tool (4) and/or detecting a body (20) approaching the machine tool (4), in particular into the safety area (8) of the machine tool (4).

4. Method according to Claim 3, **characterised by** the steps:
a. if required, storing and/or defining data, in particular body shapes and/or body outlines, in the control unit (26) for distinguishing between objects and persons (20) by means of the control unit (26).
b. detecting a body (20) approaching a machine tool (4), in particular into the safety area (8) of the machine tool (4), by means of the at least one first sensor means (22);
c. analysing the body by means of the control unit (26) and determining and recognising the detected body (20) as an object or as a person (20);
d. determining a safety-related event at least if the body comprises a person (20).

5. Method according to at least one of the preceding claims, **characterised in that** the position of the loading and unloading device (14) is detected by at least one second sensor means (30) of the safety device (24), by means of which sensor means (30) at least one distance of the loading and unloading device (14) from the machine tool (4), where the safety-related event is determined, can be detected.

6. Method according to at least one of the preceding claims, having the step that, when the at least one safety-related event is detected, the loading and unloading device (14) comprises moving the loading and unloading device (14) from the loading and unloading position in front of the machine tool (4), where the safety-related event is detected.

7. Method according to Claim 6, **characterised by** the steps:
a. interrupting machining operations of the loading and unloading device (14), which are stored or can be stored in the control unit (26), on the machine tool (4), on which the safety-related event is detected;
b. determining whether at least one machining operation of the loading and unloading device (14), which is stored or can be stored in the control unit (26), on the machine tool (4), on which no safety-related event is determined, can be continued;
c. moving the loading and unloading device (14) to a machine tool (4), on which no safety-related event is determined, and on which a machining operation, which is stored or can be stored in the control unit (26), can be executed; or
d. moving the loading and unloading device to a parking position if a safety-related event is determined on each machine tool (4) and/or on which no machining operation, which is stored or can be stored in the control unit (26), can be executed;
e. in particular continuously checking whether the safety-related event determined on the machine tool (4) is finished and whether the interrupted machining operation can be continued.

8. Workpiece machining system (2), which can be operated in accordance with a method of Claims 1 to 7, having at least one machine tool (4), which comprises at least one loading and unloading opening and at least one safety area (8), having at least one loading and unloading apparatus (10) which has at least one carrier (12) and at least one loading and unloading device (14) which can be moved along the carrier (12) and, in particular, has several axes, wherein the loading and unloading device (14) can be arranged in front of at least one of the at least one machine tool (4) in a loading and unloading position and at least one gripping arm of the loading and unloading device (14) can be moved from a travel position, in which the gripping arm (28) is arranged substantially above the carrier (12), into an engagement position, in which the gripping arm (28) projects laterally beyond the carrier (12) and in particular is arranged in or above the loading and unloading opening (6) of the machine tool (4), and having at least one safety device (24) for monitoring the safety area (8) of the at least one machine tool (4), which has at least one control unit (26), which is functionally assigned to or can be assigned to the loading and unloading apparatus (10), and at least one first sensor means (22) arranged in or on the safety area (8).

9. Workpiece machining system (2) according to Claim 8, **characterised in that** the at least one first sensor means (22) of the safety device (24) comprises at least one movement sensor, rangefinder or toggle switch of an operator access (18) of the machine tool (4).

10. Workpiece machining system (2) according to Claim 8 or 9, **characterised in that** the safety device (24) comprises at least one second sensor means (30), by means of which a distance of the loading and unloading device (14) from the machine tool (4) can be detected and which comprises a rangefinder and/or a motor position of a drive of the loading and unloading device (14).

## Revendications

1. Dispositif destiné au fonctionnement d'une installation pour la fabrication de pièces (2), qui comprend au moins une machine-outil (4), qui comprend au moins une ouverture de chargement et de déchargement (6) et au moins une zone de sécurité (8), qui comprend au moins un dispositif de chargement et de déchargement (10), qui comprend au moins un support (12) et au moins un dispositif de chargement et de déchargement (14), qui peut être déplacé le long du support (12) et qui se trouve dans une zone de sécurité du dispositif de chargement et de déchargement (14), notamment à plusieurs axes, le dispositif de chargement et de déchargement (14) pouvant être disposé devant au moins une des machines-outils (4) dans une position de chargement et de déchargement et au moins un bras de préhension (28) du dispositif de chargement et de déchargement (14) pouvant être déplacé à partir d'une position de déplacement dans laquelle le bras de préhension (28) est disposé sensiblement au-dessus du support (12), dans une position d'engagement dans laquelle le bras de préhension (28) dépasse latéralement du support (12) et est disposé, en particulier, dans ou au-dessus de l'ouverture de chargement et de déchargement (6) de la machine-outil (4) et qui comprend au moins un dispositif de sécurité (24) pour la surveillance de la zone de sécurité (8) d'au moins une machine-outil (4), qui présente au moins une unité de commande (26) pouvant être associée fonctionnellement ou étant associée au dispositif de chargement et de déchargement (10) et au moins un premier moyen de détection (22) disposé dans ou sur la zone de sécurité (8), avec les étapes suivantes :
a. le cas échéant, stocker et/ou définir au moins un événement lié à la sécurité dans l'unité de commande (26) ;
b. surveiller au moins une zone de sécurité (8) au moins une machine-outil (4) par au moins un premier moyen de détection (22) du dispositif de sécurité (24) ;
c. détecter la position du dispositif de chargement et de déchargement (14) indirectement ou directement par l'unité de commande (26) ;
d. détecter au moins un événement relatif à la sécurité défini ou mémorisé par l'unité de commande (26) ou au moins un événement relatif à la sécurité défini ou mémorisé par l'unité de commande (26) dans la zone de sécurité (8) de la machine-outil (4) par au moins un premier moyen de détection (22) ;
e. bloquer le transfert du bras de préhension (28) du dispositif de chargement et de déchargement (14) de la position de traversée à la position d'engagement lorsque le bras de préhension (28) est en position de traverse, et transférer le bras de préhension (28) du dispositif de chargement et de déchargement (14) de la position d'engagement à la position de traversée lorsque le bras de préhension (28) est en position d'engagement.

2. Dispositif suivant la revendication 1, **caractérisé en ce qu'**au moins un événement de sécurité défini, définissable, mémorisé ou stockable dans l'unité de commande (26) comprend au moins une position fonctionnelle ouverte d'un accès de commande (18) de la machine-outil (4), un transfert de l'accès de commande (18) d'une position fonctionnelle fermée à la position fonctionnelle ouverte et/ou une intrusion d'un corps (20) dans la zone de sécurité (8) de la machine-outil (4).

3. Dispositif suivant la revendication 1 ou 2, **caractérisé en ce que** la surveillance de la zone de sécurité (8) de la machine-outil (4) par au moins un premier moyen de détection (22) du dispositif de sécurité (24) comprend une détection d'une position fonctionnelle fermée ou d'une position fonctionnelle ouverte de l'accès de commande (18) de la machine-outil (4) et/ou une détection d'une approche d'un corps (20) vers la machine-outil (4), en particulier dans la zone de sécurité (8) de la machine-outil (4).

4. Dispositif suivant la revendication 3, **caractérisé par** les étapes suivantes :
a. le cas échéant, déposer et/ou définir les données, en particulier les formes corporelles et/ou les contours corporels, dans l'unité de commande (26) pour distinguer des objets et des personnes (20) par l'unité de commande (26) ;
b. détecter avec au moins un premier moyen de détection (22) l'une approche d'un corps (20) vers une machine-outil (4), en particulier dans la zone de sécurité (8) de la machine-outil (4) ;
c. analyser le corps par l'unité de commande (26) et déterminer et reconnaître le corps détecté (20) comme un objet ou comme une personne (20) ;
d. détecter un événement lié à la sécurité au moins lorsque le corps comprend une personne (20).

5. Dispositif suivant au moins une des revendications précédentes, **caractérisé en ce que** la position du dispositif de chargement et de déchargement (14) est détectée par au moins un deuxième moyen de détection (30) du dispositif de sécurité (24), grâce auquel il est possible de détecter au moins une distance du dispositif de chargement et de déchargement (14) par rapport à la machine-outil (4) à laquelle l'événement pertinent pour la sécurité est détecté.

6. Dispositif suivant au moins une des revendications précédentes, comprenant l'étape selon laquelle le dispositif de chargement et de déchargement (14) comprend, lors de la détection d'au moins un événement pertinent pour la sécurité, le déplacement du dispositif de chargement et de déchargement (14) de la position de chargement et de déchargement devant la machine-outil (4) à laquelle l'événement pertinent pour la sécurité est détecté.

7. Dispositif suivant la revendication 6, **caractérisé par** les étapes suivantes :
a. interrompre les opérations de fabrication du dispositif de chargement et de déchargement (14), qui peuvent être mémorisées ou sont mémorisées par l'unité de commande (26), sur la machine-outil (4) sur laquelle l'événement pertinent pour la sécurité est détecté ;
b. déterminer si une opération de fabrication du dispositif de chargement et de déchargement (14), qui peut être mémorisée ou est mémorisée par l'unité de commande (26), peut être continuée sur une machine-outil (4) sur laquelle aucun événement pertinent pour la sécurité n'a été détecté ;
c. déplacer le dispositif de chargement et de déchargement (14) vers une machine-outil (4) sur laquelle aucun événement relatif à la sécurité n'a été détecté et sur laquelle une opération de fabrication pouvant être mémorisée ou étant mémorisée par l'unité de commande (26) peut être exécutée ; ou
d. déplacer le dispositif de chargement et de déchargement vers une position de stationnement si un événement pertinent pour la sécurité est détecté sur chaque machine-outil (4) et/ou sur laquelle aucune opération de fabrication pouvant être mémorisée ou enregistrée par l'unité de commande (26) ne peut être exécutée ;
e. vérifier surtout en permanence si l'événement de sécurité détecté sur la machine-outil (4) est terminé et si le processus de fabrication interrompu peut être repris.

8. L'installation pour la fabrication de pièces (2), qui peut être exploitée selon un procédé des revendications 1 à 7, avec au moins une machine-outil (4), qui présente au moins une ouverture de chargement et de déchargement et au moins une zone de sécurité (8), avec au moins un dispositif de chargement et de déchargement (10), qui présente au moins un support (12) et au moins un dispositif de chargement et de déchargement (14), qui peut être déplacé le long du support (12) et, en particulier dispositif de chargement et de déchargement à plusieurs axes (14), le dispositif de chargement et de déchargement (14) pouvant être disposé devant au moins une des machines-outils (4) dans une position de chargement et de déchargement et au moins un bras de préhension du dispositif de chargement et de déchargement (14) pouvant être déplacé d'une position transversale dans laquelle le bras de préhension (28) se trouve dans la position de chargement et de déchargement à une position transversale dans laquelle le bras de préhension (28) se trouve dans la position de chargement et de déchargement, dans laquelle le bras de préhension (28) est disposé sensiblement au-dessus du support (12), en une position d'engagement dans laquelle le bras de préhension (28) dépasse latéralement du support (12) et est disposé, en particulier, dans ou au-dessus de l'ouverture de chargement et de déchargement (6) de la machine-outil (4) et avec au moins un dispositif de sécurité (24) pour la surveillance de la zone de sécurité (8) de la au moins une machine-outil (4), qui présente au moins une unité de commande (26) pouvant être associée fonctionnellement ou associée au dispositif de chargement et de déchargement (10) et au moins un premier moyen de détection (22) disposé dans ou sur la zone de sécurité (8).

9. L'installation pour la fabrication de pièces (2) suivant la revendication 8, **caractérisée en ce qu'**au moins un premier moyen de détection (22) du dispositif de sécurité (24) comprend au moins un capteur de mouvement, un télémètre ou un interrupteur à bascule d'un accès opérateur (18) de la machine-outil (4).

10. L'installation pour la fabrication de pièces (2) suivant la revendication 8 ou 9, **caractérisée en ce que** le dispositif de sécurité (24) comprend au moins un deuxième moyen de détection (30), au moyen duquel une distance du dispositif de chargement et de déchargement (14) par rapport à la machine-outil (4) peut être détectée et qui comprend un compteur de distance et/ou une position de moteur d'un entraînement du dispositif de chargement et de déchargement (14).
